# EUROPEAN PATENT APPLICATION

(11) **EP 3 135 732 A1**
(43) Date of publication of application: **01.03.2017**
(21) Application number: 15783366.6
(22) Date of filing: 12.02.2015
(51) Int. Cl.: C08L 91/00, C08L 25/04, C09K 3/10

(54) **THERMOPLASTIC ELASTOMER COMPOSITION**

(30) Priority: 25.04.2014 JP 2014091935
(71) Applicant: Idemitsu Kosan Co., Ltd, Tokyo 100-8321 (JP)
(72) Inventor: ONO Takashi, Ichihara-shi Chiba 299-0107 (JP)
(74) Representative: Hoffmann Eitle
(86) International application number: PCT/JP2015/053862
(87) International publication number: WO 2015/162976

(57) **Abstract**

A thermoplastic elastomer composition includes a base oil and a styrene thermoplastic elastomer composition, in which the base oil has a kinematic viscosity at 40 degrees C in a range from 5 mm²/s to 75 mm²/s, a flash point of 150 degrees C or more, 3.0 or less of a maximum value of ultraviolet absorbance at a wavelength from 190 nm to 350 nm, and an aniline point of 120 degrees C or less, and 500 parts by mass or more of the base oil is contained relative to 100 parts by mass of the styrene thermoplastic elastomer.

## Description

### TECHNICAL FIELD

The present invention relates to a thermoplastic elastomer composition in a form of an extremely soft gel.

### BACKGROUND ART

Recently, usage of a thermoplastic elastomer in a form of an extremely soft gel at the room temperature (i.e., oil gel) has been expanded. For instance, the thermoplastic elastomer has been used for an antivibration member, shock-absorbing member, heat-insulating member, sealing member, pressure member, artificial skin member, 3D printer material and the like.

As such a gel thermoplastic elastomer composition, there have been known a thermoplastic elastomer composition (see Patent Literature 1) including: (a) 100 parts by weight of a non-aromatic hydrocarbon rubber softer; (b) 3 to 110 parts by weight of a hydrogenated or partially hydrogenated block copolymer; and (c) 0.1 to 30 parts by weight of a surfactant, and a thermoplastic elastomer composition (see Patent Literature 2) including: (a) 100 parts by weight of a non-aromatic hydrocarbon rubber softer; (b) 3 to 110 parts by weight of a hydrogenated or partially hydrogenated block copolymer; (c) 0.1 to 30 parts by weight of a surfactant, and (d) 0.01 to 10 parts by weight of an organic peroxide.

According to the thermoplastic elastomer composition disclosed in Patent Literature 1, a gel thermoplastic elastomer composition and a molded product thereof, both of which exhibit excellent transparency and moisture-retaining property, less oil bleed, a smooth touch-feeling of a surface of the thermoplastic elastomer composition or the molded product, and an excellent adherence to a film such as a polyethylene film and a polyurethane film, can be provided. According to the thermoplastic elastomer composition disclosed in Patent Literature 2, a gel thermoplastic elastomer composition and a molded product thereof, both of which can be easily manufactured and molded and exhibit an excellent moisture-retaining property, less oil bleed, a smooth touch-feeling of a surface of the thermoplastic elastomer composition or the molded product thereof, an excellent adherence to a film such as a polyethylene film and a polyurethane film, and excellent tear resistance, oil resistance and compression set even at a high temperature and a high pressure, can be provided.

### CITATION LIST

### PATENT LITERATURE(S)

Patent Literature 1: JP-A-2008-260958
Patent Literature 2: JP-A-2008-260957

### SUMMARY OF THE INVENTION

### PROBLEM(S) TO BE SOLVED BY THE INVENTION

Even the techniques disclosed in Patent Literatures 1 and 2 are not always sufficient to provide a gel thermoplastic elastomer composition causing no oil bleed and exhibiting an excellent wear resistance.

An object of the invention is to provide a gel thermoplastic elastomer composition causing no oil bleed and exhibiting an excellent wear resistance.

### MEANS FOR SOLVING THE PROBLEM(S)

In order to solve the above problem, the invention provides a thermoplastic elastomer composition as follows.
(1) According to an aspect of the invention, a thermoplastic elastomer composition includes a base oil and a styrene thermoplastic elastomer composition, in which the base oil has a kinematic viscosity at 40 degrees C in a range from 5 mm2/s to 75 mm2/s, a flash point of 150 degrees C or more, 3.0 or less of a maximum value of ultraviolet absorbance at a wavelength from 190 nm to 350 nm, and an aniline point of 120 degrees C or less, and 500 parts by mass or more of the base oil is contained relative to 100 parts by mass of the styrene thermoplastic elastomer.
(2) In the above arrangement, the base oil is a mineral oil.
(3) In the above arrangement, the styrene thermoplastic elastomer has a mass average molecular weight of 100,000 or more.
(4) In the above arrangement, the composition has hardness of 40A or less at 23 degrees C.
(5) In the above arrangement, the composition is suitable for any one of an antivibration member, shock-absorbing member, heat-insulating member, sealing member, pressure member, artificial skin member, and 3D printer material.

According to the above aspect of the invention, a gel thermoplastic elastomer composition causing no oil bleed and exhibiting an excellent wear resistance can be provided.

### DESCRIPTION OF EMBODIMENT(S)

A thermoplastic elastomer composition according to an exemplary embodiment of the invention (hereinafter, also referred to as "the present composition") contains a base oil and a thermoplastic elastomer composition including a styrene thermoplastic elastomer composition, in which the base oil has a kinematic viscosity at 40 degrees C in a range from 5 mm²/s to 75 mm²/s, a flash point of 150 degrees C or more, 3.0 or less of a maximum value of ultraviolet absorbance at a wavelength from 190 nm to 350 nm, and an aniline point of 120 degrees C or less, and 500 parts by mass or more of the base oil is contained relative to 100 parts by mass of the styrene thermoplastic elastomer. The present composition will be described in details below.

### Base Oil

The base oil used for the present composition (hereinafter, also referred to as "the present base oil") may be a mineral oil and/or a synthetic oil. As the mineral oil, various known mineral oils such as a paraffinic mineral oil, an intermediate mineral oil and a naphthenic mineral oil are usable. Specific examples of the mineral oil include a light neutral oil, an intermediate neutral oil, a heavy neutral oil, and a bright stock by solvent refining or a hydrogen refining. As the synthetic oil, various known synthetic oils such as poly-alpha-olefin (including alpha-olefin copolymer) and polybutene are usable. Any one of the base oils can be used alone, or two or more thereof can be used in combination. The mineral oil and the synthetic oil may be used in combination. However, the mineral oil is preferably used as the base oil in order that the present composition exhibits performance as an oil gel.

Herein, the kinematic viscosity at 40 degrees C of the base oil is in a range of 5 mm²/s to 75 mm²/s, preferably in a range of 8 mm²/s to 70 mm²/s. At the kinematic viscosity at 40 degrees C of 5 mm²/s or more, flammability can be decreased. At the kinematic viscosity at 40 degrees C of 75 mm²/s or less, the composition can be provided in a form of a gel having an adequate viscoelasticity.

The aniline point of the present base oil is 120 degrees C or less, preferably in a range from 80 degrees C to 120 degrees C, more preferably in a range from 90 degrees C or 120 degrees C. At the aniline point of 120 degrees C or less, compatibility of the base oil with a later-described styrene thermoplastic elastomer becomes favorable. Moreover, at the aniline point of 80 degrees C or more, shape retainability becomes favorable.

In the present base oil, the maximum value of the ultraviolet absorbance at the wavelength in a range from 190 nm to 350 nm is preferably 3 or less, more preferably 2.5 or less, further preferably 2.3 or less. At the maximum value of 3 or less, the present composition exhibits an extremely excellent weather resistance. Herein, the ultraviolet absorbance is a measurement value using a cell having a 10-mm light transmission length and filled with the base oil.

### Styrene Thermoplastic Elastomer

The present composition contains the base oil and a styrene thermoplastic elastomer. The styrene thermoplastic elastomer exhibits a higher compatibility with the base oil than other kinds of thermoplastic elastomers, so that the present composition can be provided in a form of an excellent oil gel. The styrene thermoplastic elastomer preferably has a mass average molecular weight of 100,000 or more, more preferably 150,000 or more. When the styrene thermoplastic elastomer has a mass average molecular weight of 100,000 or more, the present composition can exhibit more excellent physical properties. On the other hand, in order to secure softness of the present composition in the form of the oil gel, the mass average molecular weight of the styrene thermoplastic elastomer is preferably 450,000 or less.

Examples of the styrene thermoplastic elastomer include a styrene-butadiene copolymer elastomer, a styrene-isoprene copolymer elastomer, a styrene-butadiene-isoprene copolymer elastomer, and perfectly or partially hydrogenated elastomers such as styrene-ethylene-butylene-styrene copolymer elastomer (SEBS) and styrene-ethylene-propylene-styrene copolymer elastomer (SEPS). Among the styrene thermoplastic elastomer, the hydrogenated elastomer preferably has a hydrogenation ratio of 90 mass% or more, particularly preferably 98 mass% or more. A content of a styrene unit is preferably in a range from 5 to 60 mass%, more preferably in a range from 10 to 50 mass%.

Examples of a commercially available product of the styrene thermoplastic elastomer includes DYNARON 6200 (JSR Corporation), Kraton G1651 (Shell Chemicals Japan Ltd.), SEPTON series such as SEPTON 2104 (KURARAY CO., LTD.), and Tuftec H series (Asahi Kasei Corporation).

### Present Composition

The present composition contains 500 parts by mass or more of the present base oil relative to 100 parts by mass of the styrene thermoplastic elastomer. Since 500 parts by mass or more of the present base oil is contained in the present composition, a sufficient softness as the oil gel can be given to the present composition. The content of the present base oil is preferably 600 parts by mass or more, more preferably 800 parts by mass or more, particularly preferably 1000 parts by mass or more. However, in order to inhibit the present base oil from bleeding from the present composition, the content of the present base oil is preferably 1500 parts by mass or less.

Hardness of the present composition at 23 degrees C is preferably 40A or less, more preferably 20A or less, further preferably 10A or less.

Herein, the hardness of the present composition may be measured in accordance with JIS K 6253. For instance, the present composition may be processed into a 4-mm thick sheet and measured, so that the hardness of the present composition can be accurately obtained.

The present composition is an extremely soft oil gel and suitably used for an antivibration member, shock-absorbing member, heat-insulating member, sealing member, pressure member, artificial skin member, 3D printer material and the like. Examples

The invention will be described in more detail with reference to Examples and Comparatives, However, it should be appreciated that the scope of the invention is by no means limited by the Examples and the like.

### Manufacturing Example 1 (Base Oil 1)

An intermediate crude oil was subjected to atmospheric distillation and the obtained residual oil was subjected to vacuum distillation to provide a fraction. The fraction was subjected to a two-stage hydrogenation process, so that a base oil 1 having a boiling point at the ambient pressure in a range of 260 degrees C to 410 degrees C was obtained. The base oil 1 was provided as a sample oil of Example 1. Properties of the base oil 1 are shown in Table 1.

### Manufacturing Example 2 (Base Oil 2)

An intermediate crude oil was subjected to atmospheric distillation and the obtained residual oil was subjected to vacuum distillation to provide a fraction. The fraction was subjected to a two-stage hydrogenation process, so that a base oil 2 having a boiling point at the ambient pressure in a range of 300 degrees C to 460 degrees C was obtained. The base oil 2 was provided as a sample oil of each of Examples 2 and 3. Properties of the base oil 2 are shown in Table 1.

### Manufacturing Example 3 (Base Oil 3)

An intermediate crude oil was subjected to atmospheric distillation and the obtained residual oil was subjected to vacuum distillation to provide a fraction. The fraction was subjected to a two-stage hydrogenation process, so that a base oil 3 having a boiling point at the ambient pressure in a range of 340 degrees C to 490 degrees C was obtained. The base oil 3 was provided as a sample oil of Example 4. Properties of the base oil 3 are shown in Table 1.

### Manufacturing Example 4 (Base Oil 4)

An intermediate crude oil was subjected to atmospheric distillation and the obtained residual oil was subjected to vacuum distillation to provide a fraction. The fraction was subjected to a two-stage hydrogenation process, so that a base oil 4 having a boiling point at the ambient pressure in a range of 340 degrees C to 580 degrees C was obtained. The base oil 4 was provided as a sample oil of Example 5. Properties of the base oil 4 are shown in Table 1.

### Manufacturing Example 5 (Base Oil 5)

An intermediate crude oil was subjected to atmospheric distillation and the obtained residual oil was subjected to vacuum distillation to provide a fraction. The fraction was subjected to a two-stage hydrogenation process, so that a base oil 5 having a boiling point at the ambient pressure in a range of 340 degrees C to 610 degrees C was obtained. The base oil 5 was provided as a sample oil of each of Comparatives 1 and 2. Properties of the base oil 5 are shown in Table 1.

### Manufacturing Example 6 (Base Oil 6)

An intermediate crude oil was subjected to atmospheric distillation and the obtained residual oil was subjected to vacuum distillation to provide a fraction. The fraction was subjected to a one-stage hydrogenation process, so that a base oil 6 having a boiling point at the ambient pressure in a range of 340 degrees C to 500 degrees C was obtained. The base oil 6 was provided as a sample oil of Comparative 3. Properties of the base oil 6 are shown in Table 1.

### Manufacturing Example 7 (Base Oil 7)

An intermediate crude oil was subjected to atmospheric distillation and the obtained residual oil was subjected to vacuum distillation to provide a fraction. The fraction was subjected to a one-stage hydrogenation process, so that a base oil 7 having a boiling point at the ambient pressure in a range of 340 degrees C to 600 degrees C was obtained. The base oil 7 was provided as a sample oil of Comparative 4. Properties of the base oil 7 are shown in Table 1.

**Table 1**

| | | Base Oil 1 | Base Oil 2 | Base Oil 3 | Base Oil 4 | Base Oil 5 | Base Oil 6 | Base Oil 7 |
|---|---|---|---|---|---|---|---|---|
| Kinematic Viscosity @40°C | (mm²/s) | 8.322 | 16.73 | 31.44 | 69.67 | 91.12 | 30.20 | 93.97 |
| Kinematic Viscosity @100°C | (mm²/s) | 2.306 | 3.609 | 5.386 | 9.25 | 10.86 | 5.229 | 11.06 |
| Viscosity Index | | 83 | 95 | 105 | 108 | 103 | 103 | 103 |
| Density | (g/cm³) | 0.8574 | 0.8613 | 0.8625 | 0.866 | 0.8702 | 0.8673 | 0.8742 |
| Hue (Saybolt) | | +30 | +30 | +30 | +30 | +30 | <-16 | <-16 |
| Flash Point (COC) | (°C) | 172 | 185 | 218 | 242 | 260 | 212 | 258 |
| Aniline Point | (°C) | 90.7 | 102.0 | 111.0 | 117.3 | 124.0 | 105.5 | 120.6 |
| Pour Point | (°C) | -10.0 | -15.0 | -20.0 | -17.5 | -15.0 | -20.0 | -17.5 |
| %CP | | 54.4 | 38.4 | 33.8 | 29.0 | 30.4 | 30.5 | 27.4 |
| %CN | | 45.6 | 61.6 | 66.2 | 71.0 | 69.6 | 66.1 | 69.9 |
| Maximum Absorbance | | 1.9 | 2.4 | 2.3 | 2.2 | 1.9 | 5< | 5< |

The properties of each of the sample oils were measured as follows.
1) Kinematic Viscosity: the kinematic viscosities at 40 degrees C and 100 degrees C were measured in accordance with JIS K 2283.
2) Viscosity Index: the viscosity index was measured in accordance with JIS K 2283.
3) Density: the density at 15 degrees C was measured in accordance with JIS K 2249.
4) Hue: a Saybolt color was measured in accordance with JIS K 2580.
5) Flash Point: the flash point was measured in accordance with JIS K 2265 (COC method).
6) Aniline Point: the aniline point was measured in accordance with JIS K 2256.
7) Pour Point: the pour point was measured in accordance with JIS K 2269.
8) %CP, %CN: %CP and %CN were measured in accordance with ASTM D 3238 (n-d-M ring analysis).
9) Maximum Absorbance: the maximum value of the ultraviolet absorbance at the wavelength from 190 nm to 350 nm was measured (optical path length of the cell: 10 mm).

### Examples 1 to 5, Comparatives 1 to 4

Each of the base oils 1 to 7 manufactured by the above Manufacturing Examples was blended and kneaded with a styrenic thermoplastic elastomer (manufactured by KURARAY CO., LTD: SEPTON 4044, 4077) at a predetermined ratio shown in Table 2 to provide an oil gel. The oil gel was heated into a fluid condition, put into a stainless steel container, and cooled to the room temperature into a solid condition. Subsequently, the oil gel was cut into a 3-cm cube. This gel piece was evaluated as follows in terms of hardness, presence or absence of the oil bleed, discoloration, and weather resistance. The results are shown in Table 2.

### Hardness

Hardness was measured in accordance with JIS K 6253

### Oil Bleed

After the gel piece was left at the room temperature for 24 hours, presence or absence of oil bleed was checked by touching a surface of the gel piece.

### Weather Resistance

The gel piece was subjected to a weather resistance test in which the gel piece was irradiated with light using a xenon lamp at a temperature of 65 degrees C for 500 hours. A discoloration of the gel piece was visually checked.

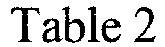

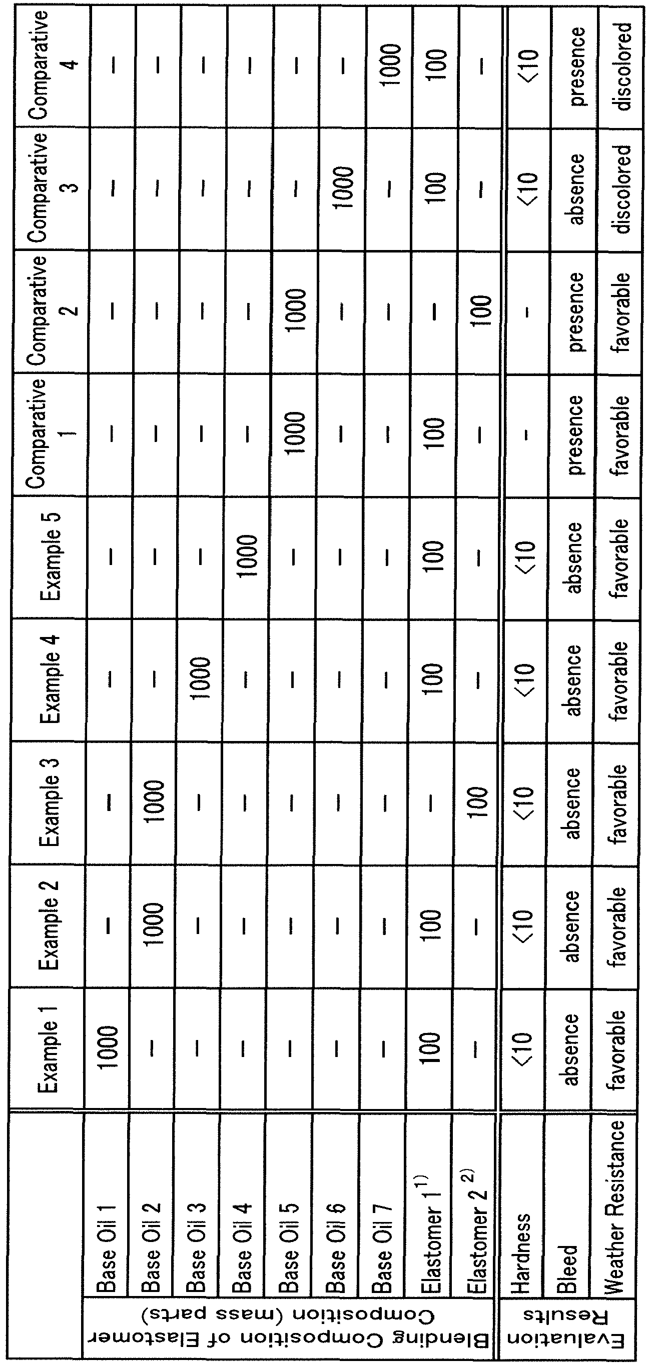

1) Elastomer 1: styrene thermoplastic elastomer (SEPTON 4044 by KURARAY CO., LTD., mass average molecular weight: 160,000)
2) Elastomer 2: styrene thermoplastic elastomer (SEPTON 4077 by KURARAY CO., LTD., mass average molecular weight: 400,000)

### Evaluation Results

It can be understood from Table 2 that all the oil gels of Examples 1 to 5 are extremely soft, free from oil bleed, and excellent in weather resistance to be usable as a gel in a wide application.

In contrast, as shown in Table 2, since the oil gels of Comparatives 1 to 4 did not contain the predetermined base oil of the invention, the oil gels of Comparatives 1 to 4 cannot be at a practical level in terms of both of the oil bleed and the weather resistance.

## Claims

1. A thermoplastic elastomer composition comprising:
a base oil; and
a styrene thermoplastic elastomer, wherein
the base oil exhibits a kinematic viscosity at 40 degrees C in a range of 5 mm²/s to 75 mm²/s, a flash point of 150 degrees C or more, 3.0 or less of a maximum value of ultraviolet absorbance at a wavelength from 190 nm to 350 nm, and an aniline point of 120 degrees C or less, and
500 parts by mass or more of the base oil is contained relative to 100 parts by mass of the styrene thermoplastic elastomer.

2. The thermoplastic elastomer composition according to claim 1, wherein
the base oil is a mineral oil.

3. The thermoplastic elastomer composition according to claim 1 or 2, wherein
the styrene thermoplastic elastomer has a mass average molecular weight of 100,000 or more.

4. The thermoplastic elastomer composition according to any one of claims 1 to 3, wherein
the composition has hardness of 40A or less at 23 degrees C.

5. The thermoplastic elastomer composition according to any one of claims 1 to 4, wherein
the composition is suitable for any one of an antivibration member, shock-absorbing member, heat-insulating member, sealing member, pressure member, artificial skin member, and 3D printer material.
